# EUROPÄISCHE PATENTSCHRIFT

(11) **EP 2 505 625 B1**
(45) Veröffentlichungstag und Bekanntmachung des Hinweises auf die Patenterteilung: **27.03.2013**
(21) Anmeldenummer: 11160695.0
(22) Anmeldetag: 31.03.2011
(51) Int. Cl.: C09D 123/08

(54) **Lackformulierung für Doseninnenflächen**
Varnishing formula for the interior surface of cans
Formulations de laque pour surfaces internes de boîtes

(43) Veröffentlichungstag der Anmeldung: 03.10.2012
(73) Patentinhaber: Henkel AG & Co. KGaA, 40589 Düsseldorf (DE); Ball Packaging Europe GmbH, 40880 Ratingen (DE)
(72) Erfinder: Kunz, Andreas, 42855, Remscheid (DE); Podwoiski, Patrick, 40699, Erkrath (DE); Endres, Holger, 41470, Neuss (DE); Schneider, Wolfgang, 40764, Langenfeld (DE); Struck, Bernd, D-53229 Bonn (DE)

(56) Entgegenhaltungen:
- DE-A1- 2 514 397
- JP-A- 2005 075 878

## Beschreibung

Die vorliegende Erfindung betrifft einen Wasser basierten Doseninnenlack enthaltend ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt, und mindestens einen wasserdispergierten oder wasserlöslichen Härter ausgewählt aus der Gruppe der Aminoplaste und/oder der Gruppe der Carbodiimide. Erfindungsgemäße Doseninnenlacke zeichnen sich darin aus, dass sie als ausgehärteter Film aufgrund der guten Vernetzung des Copolymers oder der Copolymerenmischung mit dem Härter auf den Innenflächen von metallischen Dosen hervorragende Eigenschaften bezüglich Flexibilität, Abriebfestigkeit und Widerstandsfähigkeit gegenüber wässrigen Flüssigkeiten besitzen. Die vorliegende Erfindung stellt eine Alternative zur konventionellen Verwendung von Epoxiden auf Basis von Bisphenolen in Doseninnenlacken zur Verfügung.

Weißblechband gilt in der Lebensmittelindustrie als geeignetes Material für die Herstellung von Verpackungseinheiten zur Aufnahme wässriger Flüssigkeiten oder konservierter Lebensmitteln, da Weißblech aufgrund der elektrochemisch edlen Zinnschicht auch über einen längern Zeitraum nur geringe Mengen an potentiell gesundheitsgefährdenden Zinn-Salzen an das mit der Zinnoberfläche in Kontakt stehende Lebensmittelprodukt abgibt. Weißblechband ist daher ein wichtiges Ausgangsprodukt für Lebensmittelverpackungen, beispielsweise für die Herstellung von Dosen zur Aufnahme von Getränken. Auch Aluminiumband ist aufgrund seiner passiven Oxidschicht ein geeignetes Ausgangsmaterial für die Herstellung von Dosen zur Getränkeabfüllung. Zusätzlich sind Aluminiumsalze, die in geringen Mengen von der Flüssigkeit aufgenommen werden, gesundheitlich nicht bedenklich.

Die Verpackungsindustrie bringt bei der Dosenherstellung eine organische Schutzschicht auf die Innenfläche der Dose auf oder verwendet alternativ bereits mit einem organischen Schutzlack versehenes Bandmaterial zur Dosenfertigung. Die Beschichtung der Innenflächen mit dem organischen Lack verhindert, dass die metallischen Doseninnenflächen unmittelbar mit der Flüssigkeit in Kontakt stehen. Damit wird zum einen eine deutlich verringerte Korrosion des Grundmaterials erzielt und zum anderen der Eintrag von Metallsalzen minimiert, so dass der Geschmack des Lebensmittels auch bei längerer Lagerung oder Bevorratung der Getränkedosen nicht negativ verändert wird.

Ein weiterer Aspekt bei der Herstellung von Dosen betrifft die Zusammensetzung des Lackes, der konventionell aus Bisphenol A basierten Epoxid-Harzen besteht. Derartige Epoxide mit Bisphenol A Grundkörper stehen in Verdacht estrogenartig zu wirken und bei Männern reproduktionstoxisch zu sein. Bei Kontakt ausgehärteter Lackformulierungen mit säurehaltigen wässrigen Lebensmitteln kann Bisphenol A aus dem Lack in das bevorratete Lebensmittel freigesetzt werden. Auch die Lackhärtung und die damit einhergehende Vernetzung der Lackbestandteile verläuft praktisch nie vollständig, so dass unreagierte Bisphenol A basierte Epoxide auch durch Diffusion in das Lebensmittel gelangen können. Es besteht daher ein Bedarf nach Bisphenol A freien Rezepturen für die Innenbeschichtung von Dosen zur Bevorratung von Lebensmitteln zumal verschiedene nationale Gesetzgebungsinitiativen, unter anderem veranlasst durch die EU-Direktive 2002/72/EU, zur Festlegung von Höchstgrenzen für die Migration von Bisphenol A aus Umverpackungen in Lebensmittel bestehen.

Die US 2008/0193689 offenbart eine epoxid-basierte Lackzusammensetzung geeignet für die Verwendung als Dosenlack, die neben dem modifizierten Epoxid-Harz mono- und difunktionale niedermolekulare organische Verbindungen befähigt zur Reaktion mit dem Epoxid-Harz enthält. Der Lack ist dabei so formuliert, dass nach der Härtung nur sehr geringe Mengen an unreagiertem Bisphenol A basierten Epoxiden in der Beschichtung verbleiben, so dass bei Verwendung der Rezeptur als Doseninnenlack nur Spuren an Bisphenol A aus der ausgehärteten Lackbeschichtung in das bevorratete Lebensmittel gelangen können.

Die EP 2031006 schlägt hingegen Doseninnenlacke auf Basis spezifischer alicyclischer Epoxide vor, um auf diese Weise die Einformulierung Bisphenol A basierter Epoxide zu umgehen.

Die WO 2006/045017 stellt eine Lackformulierung für Getränkedosen bereit, die Latizes von ethylenisch ungesättigten Monomeren und eine wässrige Dispersion eines säurefunktionalen Polymers in Gegenwart von Aminen umfassen, wobei die Latices zur Vernetzung zumindest teilweise aus Monomeren mit einer Glycidyl-Gruppe aufgebaut sind. Derartige Doseninnenlacke können frei von Bisphenol A basierten Epoxiden formuliert werden.

Die Aufgabe der vorliegenden Erfindung besteht darin, eine weitere Alternative zu einem Epoxid-basierten Doseninnenlack bereitzustellen, wobei die Lackformulierung im Sprühverfahren auf die Doseninnenflächen aufgebracht werden kann und nach dem Aushärten dünne homogene Lackfilme mit hoher Flexibilität bei gleichzeitig guter Lackhaftung und Beständigkeit gegenüber wässrigen Zusammensetzungen erzielt werden. Eine weitere Aufgabe besteht darin, auf den Einsatz von organischen Lösemitteln und Emulgatoren bei der Formulierung stabiler und applizierbarer Doseninnenlacke möglichst verzichten zu können.

Diese Aufgabe wird gelöst mittels Wasser basierter Doseninnenlacke enthaltend neben Wasser
a) ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt, und
b) mindestens einen wasserdispergierten oder wasserlöslichen Härter ausgewählt aus der Gruppe der Aminoplaste und/oder der Gruppe der Carbodiimide.

Unter Dosen werden erfindungsgemäß metallische Behältnisse zur Abfüllung, Lagerung und Bevorratung von Lebensmitteln, insbesondere von Getränken, verstanden.

In diesem Zusammenhang ist ein Doseninnenlack eine Lackformulierung, die zur Ausbildung einer Lackschicht auf die Innenflächen der Dose aufgebracht, verfilmt und ausgehärtet wird, um den unmittelbaren Kontakt des Lebensmittels mit dem metallischen Dosenmaterial bei der Abfüllung, Lagerung und Bevorratung desselben zu unterbinden.

Ein Wasser basierter Lack umfasst erfindungsgemäß eine Dispersion und/oder Emulsion von organischen Polymeren in einer kontinuierlichen wässrigen Phase, wobei unter einer wässrigen Phase im Rahmen der vorliegenden Erfindung auch eine homogene Mischung von Wasser und einem wassermischbaren Lösemittel verstanden wird. Der Begriff "in wasserdispergierter Form" bedeutet demnach, dass das jeweilige Polymer in der kontinuierlichen wässrigen Phase fest- oder flüssigdispers vorliegt.

Als Copolymerenmischung gelten erfindungsgemäß Mischungen chemisch und/oder strukturell unterschiedlicher Copolymere zumindest eines aliphatischen und acyclischen Alkens mit zumindest einer α,β-ungesättigten Carbonsäure. So können in einer Copolymerenmischung einer erfindungsgemäßen Lackformulierung beispielsweise Copolymere, die unterschiedliche Alkene oder unterschiedliche a,β-ungesättigte Carbonsäuren als Comonomere enthalten oder eine unterschiedliche Anzahl an ansonsten gleichen Comonomeren im Copolymer aufweisen, nebeneinander vorliegen.

Die Säurezahl ist erfindungsgemäß eine experimentell zu bestimmende Kennzahl, die ein Maß für die Anzahl der freien Säuregruppen im Copolymer oder in der Copolymerenmischung ist. Die Säurezahl wird bestimmt, indem eine eingewogene Menge des Copolymers oder der Copolymerenmischung in einem Lösemittelgemisch aus Methanol und destilliertem Wasser im Volumenverhältnis 3 : 1 gelöst und anschließend mit 0,05 mol/l KOH in Methanol potentiometrisch titriert wird. Die potentiometrische Messung erfolgt mit einer Einstabmesskette (LL-Solvotrode^{®} der Fa. Metrohm; Bezugselektrolyt: 0,4 mol/l Tetraethylammoniumbromid in Ethylenglykol). Die Säurezahl entspricht dabei der hinzugesetzten Menge an KOH in Milligramm pro Gramm Copolymer bzw. Copolymerenmischung im Wendepunkt der potentiometrischen Titrationskurve.

Das Copolymer oder die Copolymerenmischung des aliphatischen und acyclischen Alkens mit einer α,β-ungesättigten Carbonsäure mit der vorgegebenen Säurezahl zeigt als ein auf Metalloberflächen aufgeschmolzener dünner Film bereits eine gute Lackhaftung, insbesondere auf Oberflächen von Weißblech und Aluminium. Zusätzlich vermitteln die Säuregruppen dem Copolymers oder der Copolymerenmischung die inhärente Eigenschaft selbstemulgierend zu sein, so dass in wässriger Phase auch ohne Anwesenheit von Emulgatoren bei Anwendung von Scherkräften mikropartikuläre Aggregate gebildet werden können. Das Vorliegen der Copolymere oder Copolymerenmischung in Form mikropartikulärer Aggregate verleiht dem erfindungsgemäßen Lack thixothrope Eigenschaften, so dass ein homogener Nassfilm des Wasser basierten Lackes auf den Innenflächen der Dose appliziert werden kann, der bis zu seiner Verfilmung und Härtung bestehen bleibt und nicht unter der Schwerkraftwirkung im Doseninneren zusammenläuft.

Liegt die Säurezahl der Copolymere oder Copolymerenmischung von Alkenen und α,β-ungesättigten Carbonsäuren unterhalb von 20 mg KOH / g, so besitzt eine ausgehärtete Lackformulierung nach der Art der vorliegenden Erfindung eine nicht ausreichende Haftung auf Metalloberflächen und eignet sich daher nicht als filmbildender Bestandteil von Doseninnenlacken. Umgekehrt bedingt eine Säurezahl der Copolymere oder der Copolymerenmischung von Alkenen und α,β-ungesättigten Carbonsäuren oberhalb von 200 mg KOH / g als filmbildender Bestandteil in Doseninnenlacken eine nur unzureichende Barrierewirkung gegenüber korrosiv wirkenden Ionen in wässrigen Medien und zudem eine Lackbeschichtung, die gegenüber Wasser bei Temperaturen oberhalb von 60 °C vergleichsweise wenig widerstandfähig ist.

Der Gewichtsanteil der aliphatischen und acyclischen Alkene beträgt im Copolymer oder in der Copolymerenmischung vorzugsweise zumindest 40 Gew.-%, besonders bevorzugt zumindest 60 Gew.%, jedoch vorzugsweise nicht mehr als 95 Gew.-%. Hierdurch wird gewährleistet, dass die Durchlässigkeit des auf der Doseninnenfläche ausgehärteten Lackes für Ionen und das Aufquellen desselben bei Kontakt mit wässrigen Medien bei gleichzeitig hinreichender Benetzungsfähigkeit und Haftung des Lackes zum Dosenmaterial maximal erniedrigt wird.

Bevorzugte aliphatische und acyclische Alkene der erfindungsgemäß enthaltenen Copolymere oder der Copolymerenmischung sind ausgewählt aus Ethen, Propen, 1-Buten, 2-Buten, Isobuten, 1,3-Butadien und/oder 2-Methylbuta-1,3-dien, besonders bevorzugt Ethen. Bevorzugte α,β-ungesättigten Carbonsäuren der erfindungsgemäß enthaltenen Copolymere oder der Copolymerenmischung sind ausgewählt aus Zimtsäure, Crotonsäure, Fumarsäure, Itaconsäure, Maleinsäure, Acrylsäure und/oder Methacrylsäure, besonders bevorzugt Acrylsäure und/oder Methacrylsäure, insbesondere Acrylsäure.

Weitere Comonomere, die in einem erfindungsgemäßen Doseninnenlack zusätzlicher Bestandteil der Copolymere oder Copolymerenmischung sein können, sind ausgewählt aus Estern von α,β-ungesättigten Carbonsäuren, vorzugsweise lineare oder verzweigte Alkylester der Acrylsäure und/oder Methacrylsäure mit nicht mehr als 12 Kohlenstoffatomen im aliphatischen Rest. Derartige Comonomere verbessern die Haftung des ausgehärteten Doseninnenlackes auf Metalloberflächen aufgrund einer erhöhten Beweglichkeit des Polymergrundgerüstes, die wiederum die Orientierung der oberflächenaffinen Säuregruppen zur Metalloberfläche erleichtert. Dieser Effekt kommt insbesondere bei niedrigen Säurezahlen des Copolymers unterhalb von 100 mg KOH / g zum Tragen. Es zeigt sich allgemein, dass niedrige Säurezahlen der Copolymere oder der Copolymerenmischung die Barriereeigenschaften der ausgehärteten erfindungsgemäßen Lackformulierung bei Exposition mit wässrigen Medien verbessern. Dementsprechend sind Copolymere oder Copolymermischungen, die zusätzlich die zuvor beschriebenen Comonomere enthalten, mit Säurezahlen unterhalb von 100 mg KOH / g, insbesondere unterhalb von 60 mg KOH / g erfindungsgemäß bevorzugt.

Das Copolymer oder die Copolymerenmischung des erfindungsgemäßen Doseninnenlackes enthält vorzugsweise weniger als 0,05 Gew.-%, besonders bevorzugt weniger als 0,01 Gew.-%, an epoxidisch gebundenem Sauerstoff.

Für eine gute Filmbildung beim Aushärten des Doseninnenlackes ist es erforderlich, dass das Wasser dispergierte Copolymer oder die Wasser dispergierte Copolymerenmischung des Doseninnenlackes nach Verflüchtigung der wässrigen Phase in den schmelzflüssigen Zustand übergeht. Um diesem Erfordernis zu genügen, sind Copolymere oder Coplymerenmischungen bevorzugt, die als solche eine Glasübergangstemperatur von nicht mehr als 80 °C, besonders bevorzugt von nicht mehr als 60 °C aufweisen. Üblicherweise besitzen Copolymere oder Copolymerenmischungen zusammengesetzt aus Alkenen und α,β-ungesättigten Carbonsäuren mit einem gewichtsmittleren Molekulargewicht M_{w} von nicht mehr als 20.000 u Glasübergangstemperaturen deutlich unterhalb von 100 °C, so dass Copolymere oder Copolymermischungen mit einem gewichtsmittleren Molekulargewicht von nicht mehr als 20.000 u, insbesondere von nicht mehr als 15.000 u in erfindungsgemäßen Doseninnenlacken bevorzugt sind.

Bei dem erfindungsgemäßen Doseninnenlack liegen die Säuregruppen des in Wasser dispergierten Copolymers oder der in Wasser dispergierten Copolymerenmischung zumindest teilweise neutralisiert vor. Diese Maßnahme erhöht die Fähigkeit der Copolymere zur Selbstemulgierung in der wässrigen Phase, so dass stabilere Lackformulierungen mit geringeren Partikelgrößen der dispergierten Copolymere resultieren. Dementsprechend enthält der Doseninnenlack vorzugsweise zusätzlich ein Neutralisationsmittel. Als Neutralisationsmittel, die in einer solchen bevorzugten Formulierung zusätzlich im Doseninnenlack enthalten sind, eignen sich vorzugsweise Ammoniak, Amine, metallisches Aluminium und/oder Zink, vorzugsweise in Pulverform, sowie wasserlösliche Oxide und Hydroxide der Elemente Li, Na, K, Mg, Ca, Fe(II) und Sn(II). Dem Fachmann ist an dieser Stelle bewusst, dass die Neutralisationsmittel entsprechend ihrer Funktion mit den Bestandteilen des erfindungsgemäßen Lackes Neutralisationsreaktionen eingehen und daher als solche in diesen bevorzugten Formulierungen gegebenenfalls nur indirekt in Form ihrer Reaktionsprodukte nachweisbar sind. Beispielsweise reagiert metallisches Aluminium- oder Zinkpulver in der wässrigen Phase unter Wasserstoffentwicklung zu den entsprechenden Hydroxiden, die wiederum die Neutralisation von Säuregruppen des Copolymers oder der Copolymerenmischung herbeiführen, so dass im erfindungsgemäßen Lack letztlich nur die Kationen der Elemente Aluminium oder Zink nachweisbar sind. Die Neutralisationsmittel sind daher lediglich als Formulierungshilfe des erfindungsgemäßen Doseninnenlackes zu verstehen. Besonders bevorzugte Neutralisationsmittel sind Ammoniak und Amine, da diese beim Aushärten des Lackes bei erhöhter Temperatur in die Gasphase übergehen und damit nicht im ausgehärteten Doseninnenlack zurückbleiben. Bevorzugte Amine, die als Neutralisationsmittel in erfindungsgemäßen Doseninnenlacken eingesetzt werden können sind Morpholin, Hydrazin, Hydroxylamin, Monoethanolamin, Diethanolamin, Triethanolamin, Dimethylethanolamin und/oder Diethylethanolamin.

Die Neutralisation der Säuregruppen des Copolymers oder der Copolymerenmischung im erfindungsgemäßen Doseninnenlack erfolgt vorzugsweise in einem solchen Maß, dass zumindest 20%, besonders bevorzugt zumindest 30% der Säuregruppen neutralisiert vorliegen. Hohe Neutralisationsgrade oberhalb von 70%, vorzugsweise oberhalb von 60%, sind in einer bevorzugten Ausführungsform des Doseninnenlackes zu vermeiden, da die nahezu vollständig neutralisierten Copolymere bereits in signifikanten Mengen in Wasser gelöst vorliegen, was wiederum eine hohe Viskosität des Lackes und mittlere Partikelgrößen der dispergierten Copolymere oder der Copolymerenmischung im Submikrometer-Bereich zur Folge hat, so dass derartige Formulierungen als Doseninnenlacke wegen ihrer rheologischen Eigenschaften weniger gut geeignet sind.

In diesem Zusammenhang ist es bevorzugt, das Neutralisationsmittel dem Doseninnenlack in einer solchen Menge hinzuzuformulieren, dass bezogen auf 1 g des Copolymers oder der Copolymerenmischung zumindest 4/z µmol, vorzugsweise zumindest 6/z µmol jeweils multipliziert mit der Säurezahl des Copolymers oder der Copolymerenmischung an Neutralisationsmittel enthalten sind, jedoch vorzugsweise nicht mehr als 12/z µmol, besonders bevorzugt nicht mehr als 10/z µmol, multipliziert mit der Säurezahl des Copolymers oder der Copolymerenmischung. Der Divisor z ist eine natürliche Zahl und entspricht der Äquivalentzahl der Neutralisationsreaktion. Die Äquivalentzahl gibt an wie viel Mol Säuregruppen des Copolymers oder der Copolymerenmischung ein Mol des Neutralisationsmittels zu neutralisieren vermag.

Der erfindungsgemäße Doseninnenlack enthält einen wasserdispergierten oder wasserlöslichen Härter aus der Gruppe der Aminoplaste und/oder der Gruppe der Carbodiimide. Der Härter vermag es, mit dem Copolymer oder der Copolymerenmischung in einer Kondensationsreaktion zu vernetzen und so einen ausgehärteten Lackfilm auf den Doseninnenflächen auszubilden. Die Barriereeigenschaften des als Film ausgehärteten erfindungsgemäßen Doseninnenlackes sind vergleichbar mit denen von ausgehärteten Epoxid-basierten Lackfilmen.

Der Härter muss im erfindungsgemäßen Lack die Eigenschaft besitzen, erst bei Temperaturen oberhalb der Glasübergangstemperatur, vorzugsweise erst oberhalb von 100 °C, mit dem Copolymer oder der Copolymerenmischung über Kondensationsreaktionen zu vernetzen, da anderenfalls auf den Doseninnenflächen bereits vor einer vollständigen Verfilmung der dispergierten polymeren Bestandteile des Lackes eine Aushärtung erfolgt und sehr heterogene Lackfilme erzeugt werden.

Besonders geeignete Aminoplast-Härter basieren auf Melamin, Harnstoff, Dicyandiamid, Guanamine und/oder Guanidin. Insbesondere bevorzugt sind in erfindungsgemäßen Doseninnenlacken Melamin-Formaldehyd-Harze als Aminoplast-Härter mit einem molaren Verhältnis von Formaldehyd : Melamin, das bevorzugt größer als 1,5 ist.

Alternativ oder zusätzlich ist der Härter des erfindungsgemäßen Doseninnenlackes ein Carbodiimid. Carbodiimide weisen erfindungsgemäß zumindest eine Diimid-Struktureinheiten der Art -C=N=C- auf. Sie sind jedoch bevorzugt polyfunktional mit einem Diimid-Äquivalentgewicht im Bereich von 300-500 Gramm der polyfunktionalen Verbindung pro Mol an Dümid-Gruppen. Insbesondere sind Carbodiimide bevorzugt, die aus Isocyanaten mit zumindest zwei Isocyanat-Gruppen durch Decarboxylierung hervorgehen, insbesondere solche der allgemeinen Strukturformel (I): 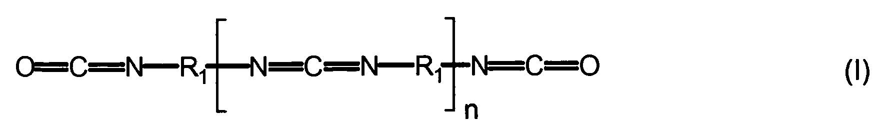 mit
n: ganze natürliche Zahl im Bereich von 1 bis 20;
R₁: aromatischer, aliphatischer oder alicyclischer Rest mit nicht mehr als 16 Kohlenstoffatomen;

Die Isocyanat-Gruppen wiederum sind vorzugsweise mit hydrophilen Schutzgruppen blockiert, die als solche dem Carbodiimid eine verbesserte Wasserdispergierbarkeit bzw. Wasserlöslichkeit verleihen. Die Verwendung dieser bevorzugten Carbodiimide erbringt den zusätzlichen Vorteil, dass der Doseninnenlack nahezu vollständig frei von organischen Lösemitteln formuliert werden kann, da diese Carbodiimide eine gute Wasserlöslichkeit besitzen, ohne bereits in der wässrigen Formulierung mit dem Copolymer oder der Copolymerenmischung zu vernetzen. In einer bevorzugten Ausführungsform eines erfindungsgemäßen Doseninnenlackes, der als Härter zumindest teilweise Carbodiimide enthält, liegt der Anteil an organischen Lösemitteln daher unterhalb von 10 Gew.-%, besonders bevorzugt unterhalb von 4 Gew.-%, insbesondere bevorzugt enthält der Doseninnenlack kein Lösemittel. Geeignete Schutzgruppen mit hydrophilem Charakter sind beispielsweise Hydroxyalkylsulfonsäuren, Hydroxyalkylphosphonsäuren, Hydroxyalkylphosphorsäuren, Polyalkylenglykole sowie tertiäre oder quarternäre Aminoalkylalkohole und Aminoalkylamine.

In einer besonders bevorzugten Ausführungsform des Doseninnenlackes ist der Härter somit ausgewählt aus Carbodiimiden mit blockierten terminalen Isocyanat-Gruppen gemäß der allgemeinen Strukturformel (II): 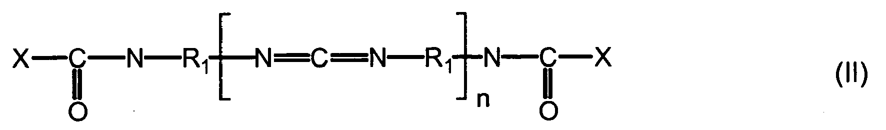 mit
n: ganze natürliche Zahl im Bereich von 1 bis 20;
R₁: aromatischer, aliphatischer oder alicyclischer Rest mit nicht mehr als 16 Kohlenstoffatomen;
X: -NH-R₁-N(R₁)₂, -O-R₁-N(R₁)₂, -NH-R₁-N(R₁)₃Y, -O-R₁-N(R₁)₃Y, -O-R₁SO₃Z,
-O-R₁-O-PO₃Z, -O-R₁- PO₃Z, -O-(C₂H₄)ₚ-OH, -O-(C₃H₆)ₚ-OH
mit Y: Hydroxid, Chlorid, Nitrat, Sulfat
mit Z: Wasserstoff, Ammmonium, Alkali- oder Erdalkalimetall
mit p: ganze natürliche Zahl im Bereich von 1 bis 6
Bevorzugte Diisocyanate, die durch Decarboxylierung die entsprechenden Carbodiimide ergeben sind beispielsweise Hexamethylendiisocyanat, Cyclohexan-1,4-diisocyanat, Xylylendiisocyanat, Isophorondiisocyanat, Dicyclohexylmethan-4,4-diisocyanat, Methylcyclohexandiisocyanat and Tetramethylxylylendiisocyanat, 1,5-naphthylendiisocyanat, 4,4-diphenylmethandiisocyanat, 4,4-diphenyldimethylmethandiisocyanat, 1,3-phenylendiisocyanat, 1,4-phenylen-diisocyanat, 2,4-toluenylendiisocyanat, 2,6-toluenylendiisocyanat,
Grundsätzlich ist es bevorzugt, dass der Härter im erfindungsgemäßen Doseninnenlack ein gewichtsmittleres Molekulargewicht M_{w} von nicht mehr als 2.500 u, besonders bevorzugt von nicht mehr als 1.500 u aufweist, um eine hinreichende Vernetzung mit dem Copolymer oder der Copolymerenmischung zu gewährleisten.

Die Fließeigenschaften erfindungsgemäßer Doseninnenlackes sind vorzugsweise so einzustellen, dass einerseits eine Auftragung des Lackes im Sprühverfahren und insbesondere den in der Getränkedosenindustrie üblichen Airless-Verfahren, das ein luftlos zerstäubendes Spritzverfahren darstellt, ermöglicht wird. Andererseits darf der auf die Innenflächen der Dose aufgebrachte Nassfilm nicht unmittelbar unter der Schwerkraftwirkung zusammenlaufen, so dass eine inhomogene Beschichtung die Folge wäre. Optimale Fließeigenschaften bei guter Verfilmung der dispergierten Bestandteile werden für erfindungsgemäße Dosenlacke erhalten, deren dispergierte polymere Bestandteile einen D₉₀-Wert von nicht mehr als 100 µm, bevorzugt von nicht mehr als 60 µm, wobei der D₅₀-Wert nicht unterhalb von 10 µm liegt. Der D₉₀-Wert bzw. der D₅₀-Wert gibt dabei an, dass 90 Vol.-% bzw. 50 Vol.-% der dispergierten Partikel des Doseninnenlackes eine Größe unterhalb des angegebenen Wertes aufweisen.

Der D₉₀-Wert bzw. der D₅₀-Wert kann aus volumengewichteten kumulativen Partikelgrößenverteilungen ermittelt werden, wobei die Partikelgrößenverteilungskurve mit Hilfe dynamischer Lichtstreumethoden gemessen werden kann.

Der Doseninnenlack weist vorzugsweise eine solche Viskosität auf, dass gemessen mit einem 4 mm DIN-Auslaufbecher der DIN EN ISO 2431 eine Auslaufzeit im Bereich von 20 bis 40 Sekunden resultiert. Liegt die Viskosität gemessen als Auslaufzeit aus dem genormten Auslaufbecher in diesem Bereich, so liegt ein Fließverhalten des Lackes als dünner Film auf dem Doseninneren vor, bei dem ein Zusammenlaufen des Nassfilms reduziert und gleichzeitig die Applikationsfähigkeit des Doseninnenlackes in Sprühverfahren gewahrt wird.

Dem erfindungsgemäßen Doseninnenlack können hilfsweise Emulgatoren hinzugesetzt werden, die die Dispergierung des Copolymers oder der Copolymerenmischung unterstützen. Hierfür sind vorzugsweise zumindest 0,1 Gew.-% an Emulgatoren hinzuzusetzen. Vorzugsweise können als Emulgatoren nichtionische Amphiphile mit einem HLB-Wert von zumindest 8 zusätzlich im Doseninnenlack enthalten sein.

Der HLB-Wert gemäß vorliegender Erfindung berechnet sich nach folgender Formel und kann auf einer willkürlichen Skala Werte von Null bis 20 annehmen:
HLB = 20.(1-Mₗ/M)
mit
Mₗ: Molmasse der lypophilen Gruppe des Amphiphils
M: Molmasse des Amphiphils

Der Anteil dieser hilfsweise hinzugesetzten Emulgatoren am Doseninnenlack beträgt vorzugsweise nicht mehr als 5 Gew.-%, besonders bevorzugt nicht mehr als 2 Gew.-%. Das im erfindungsgemäßen Doseninnenlack verwendete Copolymer bzw. die Copolymerenmischung zeichnet sich jedoch dadurch aus, dass es aufgrund seiner Säuregruppen bereits selbstemulgierende Eigenschaften besitzt. Zudem hat sich gezeigt, dass der Einsatz von Emulgatoren häufig mit einer Herabsetzung der Haftung des ausgehärteten Doseninnenlackes auf den Weißblech- und Aluminiumoberflächen einhergeht. In einer bevorzugten Ausführungsform des Doseninnenlackes sind daher für den Fall, dass die Säurezahl des Copolymers oder der Copolymerenmischung größer als 60 mg KOH / g, vorzugsweise größer als 80 mg KOH / g ist, oder der Neutralisationsgrad des Copolymers oder der Copolymerenmischung mit einer Säurezahl unterhalb von 100 mg KOH / g zumindest 30% beträgt, weniger als 0,1 Gew.-%, besonders bevorzugt weniger als 0,01 Gew.-% und insbesondere bevorzugt keine Emulgatoren auf Basis der nichtionischen Amphiphile mit einem HLB-Wert von zumindest 8 enthalten.

Alternativ oder zusätzlich zum Einsatz von Emulgatoren kann der erfindungsgemäße Doseninnenlack wassermischbare organische Lösemittel enthalten, die die Polarität der wässrigen Phase herabsetzen, um auf diese Weise die Emulgierung des Copolymers oder der Copolymerenmischung herbeizuführen. Hierfür sind vorzugsweise zumindest 1 Gew.-% wassermischbare organische Lösemittel hinzuzusetzen. Das wassermischbare Lösemittel hat dabei einen Siedepunkt bei Standardbedingungen von vorzugsweise nicht mehr als 150 °C. Geeignete Lösemittel sind Glykolether, Alkohole und Ester. Der Anteil des Lösemittels am Doseninnenlack ist vorzugsweise nicht größer als 40 Gew.-%, besonders bevorzugt nicht größer als 20 Gew.-%.

Erfindungsgemäße Doseninnenlacke können als weitere Bestandteile Netzmittel, Verlaufsmittel, Entschäumer, Katalysatoren, Filmbilder, Stabilisatoren und/oder die bereits erwähnten Neutralisationsmittel enthalten. Derartige Hilfsstoffe sind dem Fachmann auf dem Gebiet der Lackerzeugnisse allgemein bekannt, wobei unter Filmbilder in der vorliegenden Erfindung organische Polymere verstanden werden, die mit dem vorliegenden Härtersystem des Doseninnenlackes vernetzen können. Der massenbezogene Mengenanteil an Filmbildern bezogen auf das Copolymer oder die Copolymerenmischung beträgt maximal 20%, vorzugsweise maximal 10%.

Eine bevorzugte Formulierung eines erfindungsgemäßen Doseninnenlackes enthält neben zumindest 40 Gew.-% Wasser
a) 4-30 Gew.-%, vorzugsweise 10-20 Gew.-% des Copolymers oder der Copolymerenmischung in dispergierter Form,
b) 2-20 Gew.-%, vorzugsweise 4-12 Gew.-% des mindestens einen Härters,
c) nicht mehr als 5 Gew.-% an Emulgatoren ausgewählt aus nichtionischen Amphiphilen mit einem HLB-Wert von zumindest 8;
d) nicht mehr als 40 Gew.-%, vorzugsweise zumindest 1 Gew.-%, an wassermischbaren organischen Lösemitteln;
e) nicht mehr als 10 Gew.-% an Hilfsstoffen ausgewählt aus Netzmitteln, Verlaufsmitteln, Entschäumern, Katalysatoren, Filmbildern, Stabilisatoren und/oder Neutralisationsmitteln, vorzugsweise sind nicht mehr als 12/z µmol multipliziert mit der Säurezahl des Copolymers oder der Copolymerenmischung an Neutralisationsmittel pro Gramm des Copolymers oder der Copolymerenmischung mit z als Aquivalentzahl der jeweiligen Neutralisationsreaktion enthalten.

Eine besonders bevorzugte lösemittelarme Formulierung eines erfindungsgemäßen Doseninnenlackes enthält neben zumindest 40 Gew.-% Wasser
a) 4-30 Gew.-%, vorzugsweise 10-20 Gew.-% des Copolymers oder der Copolymerenmischung in dispergierter Form,
b) 2-20 Gew.-%, vorzugsweise 4-12 Gew.-% mindestens eines Härters davon zumindest 40 Gew.-% eines Carbodiimides mit terminalen, blockierten Isocyanat-Gruppen bezogen auf den Gesamtanteil des Härters,
c) nicht mehr als 5 Gew.-% an Emulgatoren ausgewählt aus nichtionischen Amphiphilen mit einem HLB-Wert von zumindest 8;
d) nicht mehr als 10 Gew.-%, vorzugsweise nicht mehr als 1 Gew.-%, an wassermischbaren organischen Lösemitteln;
e) nicht mehr als 10 Gew.-% an Hilfsstoffen ausgewählt aus Netzmitteln, Verlaufsmitteln, Entschäumern, Katalysatoren, Filmbildern, Stabilisatoren und/oder Neutralisationsmitteln, vorzugsweise sind nicht mehr als 12/z µmol multipliziert mit der Säurezahl des Copolymers oder der Copolymerenmischung an Neutralisationsmittel pro Gramm des Copolymers oder der Copolymerenmischung mit z als Aquivalentzahl der jeweiligen Neutralisationsreaktion enthalten.

Erfindungsgemäße Doseninnenlacke zeichnen sich darin aus, dass sie als ausgehärteter Film auf den Innenflächen von metallischen Dosen hervorragende Barriereeigenschaften aufgrund der guten Vernetzung des Copolymers oder der Copolymerenmischung mit dem Härter besitzen. Das metallische Grundmaterial ist folglich zum einen effektiv gegen Korrosion geschützt ist und zum anderen werden von der in der Dose bevorrateten Flüssigkeit keine Fremdstoffe aufgenommen. Damit stellt die vorliegende Erfindung eine Alternative zur konventionellen Verwendung von Epoxiden, insbesondere von Bisphenol A basierten Epoxiden, in Doseninnenlacken zur Verfügung. Konsequenterweise ist der Anteil an epoxidisch gebundenem Sauerstoff in erfindungsgemäßen Doseninnenlacken vorzugsweise nicht größer als 0,1 Gew.-%, besonders bevorzugt nicht größer als 0,01 Gew.-%. Insbesondere bevorzugt enthält ein erfindungsgemäßer Doseninnenlack keine organischen Bestandteile mit Epoxid-Gruppen.

Erfindungsgemäße Doseninnenlacke sind vorzugsweise im geschlossenenen Verfahren in Druckreaktoren unter Aufwendung von Scherkräften herstellbar, wobei sämtliche Bestandteile eines erfindungsgemäßen Doseninnenlackes in einen Druckreaktor überführt werden, um dann bei Temperaturen im Bereich von 80-200 °C und einem Druck von 1-6 bar einer Scherrate von zumindest 1.000 s⁻¹ ausgesetzt zu werden, wobei der Energieeintrag vorzugsweise im Bereich von 10³-10⁵ J pro Sekunde pro Liter der Lackformulierung liegt. Alternativ können die festen Bestandteile zusammen mit den übrigen Komponenten des Doseninnenlackes auch in einem offenen Verfahren dispergiert werden, bei dem das aufgeschmolzene Copolymer oder die aufgeschmolzene Copolymerenmischung unter zuvor genannter Scherkrafteinwirkung in die wässrige Zusammensetzung der übrigen Doseninnenlackbestandteile überführt wird. Die Scherrate und Verweildauer im jeweiligen Dispergierverfahren ist jedoch vorzugsweise so anzupassen, dass die dispergierten Bestandteile des Doseninnenlackes einen D₉₀-Wert von nicht mehr als 100 µm aufweisen, wobei der D₅₀-Wert vorzugsweise nicht unterhalb von 1 µm liegt.

Die Auftragung eines Nassfilms des erfindungsgemäßen Doseninnenlackes erfolgt vorzugsweise im Sprühverfahren, besonders bevorzugt im sogenannten Airless-Verfahren, bei dem der Doseninnenlack luftlos zerstäubt wird und so auf die Materialoberfläche aufgetragen wird. Bei diesen Sprühverfahren wird eine vorgegebene Menge des Doseninnenlackes mittels Sprühpistolen in das gereinigte und trockene Doseninnere eingebracht, während die Dose zur Ausbildung eines homogenen Nassfilms um ihre eigene Längsachse rotiert. Anschließend wird der Nassfilm auf den Doseninnenflächen in einem Trockenofen bei Temperaturen im Bereich von 120 °C bis 200 °C (Objekttemperatur) zu einem Lackfilm ausgehärtet. Der Aushärteprozess umfasst die Verflüchtigung der wässrigen Phase sowie die Verfilmung und Vernetzung der polymeren Bestandteile.

In einem weiteren Aspekt betrifft die vorliegende Erfindung die Verwendung eines Copolymers oder einer Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 70% neutralisiert vorliegen, als Bestandteil Wasser basierter Doseninnenlacke, wobei bevorzugte Verwendungen durch entsprechende der zuvor beschriebenen Ausführungsformen des Copolymers oder der Copolymerenmischungen realisiert werden können.

In einem weiteren Aspekt betrifft die vorliegende Erfindung die Verwendung eines zuvor beschriebenen Doseninnenlackes, der in einer Trockenfilmdicke von zumindest 5 g/m², jedoch vorzugsweise nicht mehr als 50 g/m² auf die Innenfläche einer Weißblechdose und in einer Trockenfilmdicke von zumindest 1,5 g/m², jedoch vorzugsweise nicht mehr als 50 g/m² auf die Innenfläche einer Aluminiumdose aufgebracht wird.

In der Tabelle 1 sind die Zusammensetzungen erfindungsgemäßer Doseninnenlacke angegeben, die mittels Sprühverfahren als Nassfilm auf den Innenflächen von Weißblechdosen aufgebracht wurden, um anschließend für 40 Sekunden bei 180 °C zu einer Trockenbeschichtung mit einem Schichtgewicht von 6-7 g/m² ausgehärtet zu werden.

Die Wasser basierten Doseninnenlacke wurden in einem offenen Reaktor durch kontinuierliches Zudosieren des aufgeschmolzenen Copolymers zu einer wässrigen Zusammensetzung der restlichen Bestandteile unter Einwirkung einer Scherbeanspruchung von 1.500 s⁻¹ bei 95 °C hergestellt. Die Homogenisierung nach der Zudosierung des Copolymers im offenen Reaktor wurde bis zum Erreichen einer konstanten Viskosität der Lackformulierung fortgeführt. Die Viskosität der Lackformulierungen gemessen als Auslaufzeit aus einem DIN 4mm Auslaufbecher gemäß DIN EN ISO 2431 lag im Bereich von 25-28 Sekunden.

Die derart homogenisierten Lackrezepturen wurden sodann in einem zweistufigen Sprühverfahren auf die Innenflächen der Weißblechdose aufgebracht, wobei die Weißblechdose axial in Rotation gebracht wird und zunächst der Dosenboden und untere Teil des Dosenrumpfes beschichtet wurde und anschließend Dosenrumpf und Boden besprüht wurden. Anschließend erfolgte die Aushärtung des Nassfilms.

Aus der Tabelle 2 geht hervor, dass die mit dem erfindungsgemäßen Lack beschichteten Weißblechdosen eine hervorragende Flexibilität (T-bend-Test) und Wasserbeständigkeit (KochTest) aufweisen. Lediglich in der Härte und Lösemittelbeständigkeit wurden unterschiedliche Testergebnisse gefunden, die jedoch allesamt den Erfordernissen der Getränkedosenindustrie entsprechen.

| Tab. 1 Beispielhafte Rezepturen erfindungsgemäßer Doseninnenlacke | | | | |
|---|---|---|---|---|
| Bestandteil | Verbindung | Bestandteile in Gew.-% (Rest Wasser) | | |
| | | B1 | B2 | B3 |
| Copolymer | Ethylen-Acrylsäure; Säurezahl 37-44 mg KOH / g; Neutralisationsgrad 50% (Dimethylethanolamin) | 17,1 | - | - |
| | Ethylen-Acrylsäure, Säurezahl 37-44 mg KOH / g Neutralisationsgrad 30% (Ammoniak) | - | 21,3 | 21,5 |
| Härter | Melaminformaldehydharz, teilmethyliert vom Iminotyp | 9,0 | - | 4,5 |
| | Polycarbodiimid mit Diimid-Äquivalentgewicht von 445 g/mol | - | 4,0 | 4,0 |
| Lösemittel | Monopropylenglykolmonomethylether | 11,0 | - | 6,0 |
| | Butylglykol | 9,0 | - | 1,7 |
| Entschäumer | Polyethersiloxan-Copolymer | 0,63 | 0,5 | 0,5 |
| Netzmittel | Bis(2-ethylhexyl)sulfosuccinat, Na-Salz | - | 0,75, | 0,75 |

| Tab. 2 Eigenschaften ausgehärteter Doseninnenlacke nach Tab.1 in Weißblechdosen | | | | | |
|---|---|---|---|---|---|
| Eigenschaft | | Test | B1 | B2 | B3 |
| Lackhaftung¹ | | T-bend nach DIN ISO 17132 | 0 | 0 | 0 |
| | | Gitterschnitt nach DIN 53151 (24h) | 0 | 0 | 0 |
| | | Kochtest nach DIN 53151 (30min bei 85 °C) | 0 | 0 | 0 |
| Lackhärte | | Bleistifthärte nach DIN ISO 15184 | HB | B | B |
| Lösemittelbeständigkeit | | MEK-Test nach DIN EN 13523-11 | 90 | 90 | 100 |
| ¹ | Unterteilung gemäß Lackablösung in % bezogen auf die getestete Fläche | | | | |
| | 0: keine Ablösung; 1: 5%; 2: 15%; 3: 35%; 4: <65%; 5: >65% | | | | |

## Patentansprüche

1. Wasser basierter Doseninnenlack enthaltend neben Wasser
a) ein Copolymer oder eine Copolymerenmischung zumindest eines aliphatischen und acyclischen Alkens mit zumindest einer α,β-ungesättigten Carbonsäure in wasserdispergierter Form, wobei die Säurezahl des Copolymers oder der Copolymerenmischung zumindest 20 mg KOH / g, jedoch nicht mehr als 200 mg KOH / g beträgt und die Säuregruppen des Copolymers oder der Copolymerenmischung in wasserdisperglerter Form zumindest teilweise, jedoch nicht mehr als zu 70% neutralisiert vorliegen, und
b) mindestens einen wasserdispergierten oder wasserlöslichen Härter ausgewählt aus der Gruppe der Aminoplaste und/oder der Gruppe der Carbodiimide,
wobei die dispergierten polymeren Bestandteile des Wasser basierten Lacks einen D₉₀-Wert von nicht mehr als 100 µm und einen D₅₀-Wert von nicht weniger als 10 µm aufweisen.

2. Doseninnenlack nach Anspruch 1, **dadurch gekennzeichnet, dass** die Säuregruppen des Copolymers oder der Copolymerenmlschung in wasserdispergierter Form zumindest zu 20%, besonders bevorzugt zumindest zu 30%, jedoch vorzugsweise nicht mehr als zu 60%, neutralisiert vorliegen.

3. Doseninnenlack nach Anspruch 2, **dadurch gekennzeichnet, dass** der Doseninnenlack zur Neutralisation der Säuregruppen des Copolymers oder der Copolymerenmischung in wasserdispergierter Form als Neutralisationsmittel Ammoniak, Amine, metallisches Al oder Zn und/oder wasserlösliche Oxide und Hydroxide der Elemente Li, Na, K, Mg, Ca, Fe(II), Sn(II) enthält.

4. Doseninnenlack nach Anspruch 3, **dadurch gekennzeichnet, dass** das Neutralisationsmittel ausgewählt ist aus Ammoniak und/oder Aminen, wobei die Amine wiederum vorzugsweise ausgewählt sind aus Morpholin, Hydrazin, Hydroxylamin, Monoethanolamin, Diethanolamin, Triethanolamin, Dimethylethanolamin und/oder Diethylethanolamin.

5. Doseninnenlack nach einem oder mehreren der vorherigen Ansprüche, **dadurch gekennzeichnet, dass** das Copolymer oder die Copolymerenmischung eine Glasübergangstemperatur von nicht mehr als 80°C, vorzugsweise nicht mehr als 60°C aufweist.

6. Doseninnenlack nach einem oder mehreren der vorherigen Ansprüche, **dadurch gekennzeichnet, dass** die aliphatischen und acyclischen Alken ausgewählt sind aus Ethen, Propen, 1-Buten, 2-Buten, Isobuten, 1,3-Butadien und/oder 2-Methylbuta-1,3-dien, vorzugsweise Ethen.

7. Doseninnenlack nach einem oder mehreren der vorherigen Ansprüche, **dadurch gekennzeichnet, dass** die α,β-ungesättigten Carbonsäuren ausgewählt sind aus Zimtsäure, Crotonsäure. Fumarsäure, Itaconsäure, Maleinsäure, Acrylsäure und/oder Methacrylsäure, vorzugsweise Acrylsäure und/oder Methacrylsäure, besonders bevorzugt Acrylsäure.

8. Doseninnenlack nach einem oder mehreren der vorherigen Ansprüche, **dadurch gekennzeichnet, dass** der Gewichtsanteil der aliphatischen und acyclischen Alkene im Copolymer oder in der Copolymerenmischung zumindest 40 Gew.-%, vorzugsweise zumindest 60 Gew.-%, jedoch nicht mehr als 95 Gew.-% beträgt.

9. Doseninnenlack nach einem oder mehreren der vorherigen Ansprüche, **dadurch gekennzeichnet, dass** das Copolymer oder die Copolymerenmischung zusätzlich aus Comonomeren besteht, die ausgewählt sind aus Estern von α,β-ungesättigten Carbonsäuren, vorzugsweise lineare oder verzweigte Alkylester der Acrylsäure und/oder Methacrylsäure mit nicht mehr als 12 Kohlenstoffatomen im aliphatischen Rest, wobei das Copolymer oder die Copolymerenmischung vorzugsweise eine Säurezahl von weniger als 100 mg KOH / g, besonders bevorzugt von weniger als 60 mg KOH / g aufweist.

10. Doseninnenlack nach einem oder mehreren der vorherigen Ansprüche enthaltend zumindest 40 Gew.-% Wasser und
a) 4-30 Gew.-%, vorzugsweise 10-20 Gew.-%, des Copolymers oder der Copolymerenmischung in dispergierter Form,
b) 2-20 Gew.-%, vorzugsweise 4-12 Gew.-%, des mindestens einen Härters,
c) nicht mehr als 5 Gew.-% an Emulgatoren ausgewählt aus nichtionischen Amphiphilen mit einem HLB-Wert von zumindest 8:
d) nicht mehr als 40 Gew.-%, vorzugsweise zumindest 5 Gew.-%, an wassermischbaren organischen Lösemitteln;
e) nicht mehr als 10 Gew.-% an Hilfsstoffen ausgewählt aus Netzmitteln, Verlaufsmitteln, Entschäumem, Katalysatoren, Filmbildern, Stabilisatoren und/oder Neutralisationsmitteln.

11. Verwendung eines Copolymeren oder einer Copolymerenmischung zumindest eines aliphatischen und acyclischen Alkens mit zumindest einer α,β-ungesättigten Carbonsäure in wasserdispergierter Form, wobei die Säurezahl der Copolymere oder der Copolymerenmischung zumindest 20 mg KOH / g, jedoch nicht mehr als 200 mg KOH / g beträgt und die Säuregruppen des Copolymers oder der Copolymerenmischung in wasserdispergierter Form zumindest zu 20%, jedoch nicht mehr als zu 70% neutralisiert vorliegen, als Bestandteil Wasser basierter Doseninnenlacke für Weißblech- oder Aluminiumdosen.

12. Verwendung eines Doseninnenlackes nach einem oder mehreren der Ansprüche 1 bis 10, **dadurch gekennzeichnet, dass** der Innenlack In einer Trockenfilmdicke von zumindest 5 g/m², jedoch vorzugsweise in einer Trockenfilmdicke von nicht mehr als 50 g/m² auf die Innenfläche einer Weißblechdose aufgebracht wird.

13. Verwendung eines Doseninnenlackes nach einem oder mehreren der vorherigen Ansprüche 1 bis 10, **dadurch gekennzeichnet, dass** der Innenlack in einer Trockenfilmdicke von zumindest 1,5 g/m², jedoch vorzugsweise in einer Trockenfilmdicke von nicht mehr als 50 g/m² auf die Innenfläche einer Aluminiumdose aufgebracht wird.

14. Verwendung nach einem oder beiden der Ansprüche 12 und 13, **dadurch gekennzeichnet, dass** der Doseninnenlack im Sprühverfahren aufgebracht wird.

## Claims

1. A water-based can inner coating comprising, in addition to water,
a) a copolymer or a copolymer mixture of at least one aliphatic and acyclic alkene with at least one α,β-unsaturated carboxylic acid in water-dispersed form, wherein the acid number of the copolymer or of the copolymer mixture is at least 20 mg KOH / g, but not more than 200 mg KOH / g, and the acid groups of the copolymer or copolymer mixture in water-dispersed form one at least partially, but not to more than 70% neutralized, and
b) at least one water-dispersed or water-soluble curing agent selected from the group of aminoplasts and/or the group of carbodiimides,
**characterized in that** the dispersed polymeric constituents of the water-based coating have a D₉₀ value of not more than 100 µm and a D₅₀ value of not less than 10 µm.

2. The can inner coating according to claim 1, **characterized in that** the acid groups of the copolymer or of the copolymer mixture in the water-dispersed form are, preferably to at least 20%, particularly preferably to at least 30%, but preferably not more than 60%. neutralized.

3. The can inner coating according to claim 2, **characterized in that** the can inner coating comprises ammonia, amines, metallic Al or Zn and/or water-soluble oxides and hydroxides of the elements Li, Na, K, Mg, Ca, Fe(II), Sn(II) as the neutralization agent for neutralizing the acid groups of the copolymer or of the copolymer mixture in water-dispersed form.

4. The can inner coating according to claim 3, **characterized in that** the neutralization agent is selected from ammonia and/or amines, wherein the amines are again preferably selected from morpholine, hydrazine, hydroxylamine, monoethanolamine, diethanolamine, triethanolamine, dimethylethanolamine and/or diethylethanolamine.

5. The can inner coating according to one or more of the previous claims, **characterized in that** the copolymer or the copolymer mixture has a glass transition temperature of not more than 80 °C, preferably not more than 60 °C.

6. The can inner coating according to one or more of the previous claims, **characterized in that** the aliphatic and acyclic alkene is selected from ethene, propene, 1-butene, 2-butene, isobutene, 1,3-butadiene and/or 2-methylbuta-1,3-diene, preferably ethene.

7. The can inner coating according to one or more of the previous claims, **characterized in that** the α,β-unsaturated carboxylic acids are selected from cinnamic acid, crotonic acid, fumaric acid, itaconic acid, maleic acid, acrylic acid and/or methacrylic acid, preferably acrylic acid and/or methacrylic acid, particularly preferably acrylic acid.

8. The can inner coating according to one or more of the previous claims, **characterized in that** the weight fraction of the aliphatic and acyclic alkenes in the copolymer or in the copolymer mixture is at least 40 wt.%, preferably at least 60 wt.%, but not more than 95 wt.%.

9. The can inner coating according to one or more of the previous claims, **characterized in that** the copolymer or the copolymer mixture additionally consists of comonomers that are selected from esters of α,β-unsaturated carboxylic acids, preferably linear or branched alkyl esters of the acrylic acid and/or methacrylic acid containing not more than 12 carbon atoms in the aliphatic group, wherein the copolymer or the copolymer mixture preferably has an acid number of less than 100 mg KOH / g, particularly preferably less than 60 mg KOH /g.

10. The can inner coating according to one or more of the previous claims, comprising at least 40 wt.% water and
a) 4-30 wt.%, preferably 10-20 wt.%, of the copolymer or of the copolymer mixture in dispersed form,
b) 2-20 wt.%, preferably 4-12 wt.%, of the at least one curing agent,
c) not more than 5 wt.% of emulsifiers selected from non-ionic amphiphiles with an HLB value of at least 8;
d) not more than 40 wt.%, preferably at least 5 wt.%, of water-miscible organic solvents;
e) not more than 10 wt.% of auxiliaries selected from wetting agents, leveling agents, defoamers, catalysts, film-formers, stabilizers and/or neutralizing agents.

11. Use of a copolymer or a copolymer mixture of at least one aliphatic and acyclic alkene with at least one α,β-unsaturated carboxylic acid in water-dispersed form, wherein the acid number of the copolymer or of the copolymer mixture is at least 20 mg KOH / g, but not more than 200 mg KOH / g, and the acid groups of the copolymer or of the copolymer mixture in the water-dispersed form are at least 20%, but not more than 70% neutralized, as a constituent of the water-based can inner coating tin plate or aluminium cans.

12. Use of a can inner coating according to one or more of the claims 1 to 10, **characterized in that** the inner coating is deposited in a dry film thickness of at least 5 g/m², but preferably in a dry film thickness of not more than 50 g/m², on to the inner surface of a tin plate can.

13. Use of a can inner coating according to one or more of the previous claims 1 to 10, **characterized in that** the inner coating is deposited in a dry film thickness of at least 1.5 g/m², but preferably in a dry film thickness of not more than 50 g/m², on to the inner surface of an aluminium can.

14. The use according to one or both of claims 12 and 13, **characterized in that** the can inner coating is deposited in the spray process.

## Revendications

1. Laque à base d'eau pour des surfaces internes de boîtes contenant, à côté de l'eau :
a) un copolymère ou un mélange de copolymères d'au moins un alcène aliphatique et acyclique avec au moins un acide carboxylique à insaturation α,β sous une forme dispersée dans l'eau, l'indice d'acide du copolymère ou du mélange de copolymères s'élevant au moins 20 mg de KOH/g, tout en n'étant pas supérieur à 200 mg de KOH/g, et les groupes acides du copolymère ou du mélange de copolymères sous une forme dispersée dans l'eau étant présents à l'état neutralisé au moins en partie, mais pas à concurrence de plus de 70 % ; et
b) au moins un durcisseur dispersé dans l'eau ou soluble dans l'eau choisi parmi le groupe des aminoplastes et/ou parmi le groupe des carbodiimides ;
les constituants polymères dispersés de la laque à base d'eau présentant une valeur D₉₀ qui n'est pas supérieure à 100 µm et une valeur D₅₀ qui n'est pas inférieure à 10 µm.

2. Laque pour des surfaces internes de boîtes selon la revendication 1, **caractérisée en ce que** les groupes acides du copolymère ou du mélange de copolymères sous la forme dispersée dans l'eau sont présents à l'état neutralisé à concurrence d'au moins 20 %, de manière particulièrement préférée d'au moins 30 %, mais de préférence à concurrence d'une valeur qui n'est pas supérieure à 60 %.

3. Laque pour des surfaces internes de boîtes selon la revendication 2, **caractérisée en ce que** la laque contient, pour la neutralisation des groupes acides du copolymère ou du mélange de copolymères sous la forme dispersée dans l'eau, à titre d'agent de neutralisation, de l'ammoniac, une amine, de l'aluminium ou du zinc métallique et/ou des oxydes solubles dans l'eau, des éléments Li, Na, K, Mg, Ca, Fe(II), Sn(II).

4. Laque pour des surfaces internes de boîtes selon la revendication 3, **caractérisée en ce que** l'agent de neutralisation est choisi parmi l'ammoniac et/ou des amines, les amines étant à leur tour choisies de préférence parmi la morpholine, l'hydrazine, l'hydroxylamine, la monoéthanolamine, la diéthanolamine, la triéthanolamine, la diméthyléthanolamine et/ou la diéthyléthanolamine.

5. Laque pour des surfaces internes de boîtes selon une ou plusieurs des revendications précédentes, **caractérisée en ce que** le copolymère ou le mélange de copolymères présente une température de transition vitreuse qui n'est pas supérieure à 80 °C, de préférence pas supérieure à 60 °C.

6. Laque pour des surfaces internes de boîtes selon une ou plusieurs des revendications précédentes, **caractérisée en ce que** les alcènes aliphatiques et acycliques sont choisis parmi l'éthène, le propène, le 1-butène, le 2-butène, l'isobutène, le 1,3-butadiène et/ou le 2-méthylbuta-1,3-diène, de préférence l'éthène.

7. Laque pour des surfaces internes de boîtes selon une ou plusieurs des revendications précédentes, **caractérisée en ce que** les acides carboxyliques à insaturation α,β sont choisis parmi l'acide cinnamique, l'acide crotonique, l'acide fumarique, l'acide itaconique, l'acide maléique, l'acide acrylique et ou l'acide méthacrylique, de préférence l'acide acrylique et/ou l'acide méthacrylique, de manière particulièrement préférée l'acide acrylique.

8. Laque pour des surfaces internes de boîtes selon une ou plusieurs des revendications précédentes, **caractérisée en ce que** la fraction pondérale des alcènes aliphatiques et acycliques dans le copolymère ou dans le mélange de copolymères s'élève à au moins 40 % en poids, de préférence à au moins 60 % en poids, mais n'est pas supérieure à 95 % en poids.

9. Laque pour des surfaces internes de boîtes selon une ou plusieurs des revendications précédentes, **caractérisée en ce que** le copolymère ou le mélange de copolymères est constitué en outre par des comonomères qui sont choisis parmi des esters d'acides carboxyliques à insaturation α,β, de préférence des esters alkyliques à chaîne droite ou ramifiée de l'acide acrylique et/ou de l'acide méthacrylique dont le résidu aliphatique ne contient pas plus de 12 atomes de carbone, le copolymère ou le mélange de copolymères présentant de préférence un indice d'acide inférieur à 100 mg de KOH/g, de manière particulièrement préférée inférieur à 60 mg de KOH/g.

10. Laque pour des surfaces internes de boîtes selon une ou plusieurs des revendications précédentes contenant au moins 40 % en poids d'eau ; et
a) de 4 à 30 % en poids, de préférence de 10 à 20 % en poids du copolymère ou du mélange de copolymères sous forme dispersée ;
b) de 2 à 20 % en poids, de préférence de 4 à 12 % en poids dudit au moins un durcisseur ;
c) pas plus de 5 % en poids d'émulsifiants choisis parmi des composés amphiphiles non ioniques possédant une valeur HLB d'au moins 8 ;
d) pas plus de 40 % en poids, de préférence au moins 5 % en poids de solvants organiques miscibles à l'eau ;
e) pas plus de 10 % en poids de substances auxiliaires choisies parmi des agents mouillants, les agents de réglage de l'écoulement, des agents antimousse, des catalyseurs, des agents filmogènes, des stabilisateurs et/ou des agents de neutralisation.

11. Utilisation d'un copolymère ou d'un mélange de copolymères d'au moins un alcène aliphatique et acyclique avec au moins un acide carboxylique à insaturation α,β sous une forme dispersée dans l'eau, l'indice d'acide du copolymère ou du mélange de copolymères s'élevant au moins 20 mg de KOH/g, tout en n'étant pas supérieur à 200 mg de KOH/g, et les groupes acides du copolymère ou du mélange de copolymères sous une forme dispersée dans l'eau étant présents à l'état neutralisé au moins à concurrence de 20%, mais pas à concurrence de plus de 70 %, à titre de constituant de laque à base d'eau pour des surfaces internes pour des boîtes en fer-blanc ou en aluminium.

12. Utilisation d'une laque pour des surfaces internes de boîtes selon une ou plusieurs des revendications 1 à 10, **caractérisée en ce que** la laque pour des surfaces internes est appliquée avec une épaisseur du film à sec d'au moins 5 g/m², mais de préférence avec une épaisseur du film à sec qui n'est pas supérieure à 50 g/m² sur la surface interne d'une boîte en fer-blanc.

13. Utilisation d'une laque pour des surfaces internes de boîtes selon une ou plusieurs des revendications 1 à 10, **caractérisée en ce que** la laque pour des surfaces internes est appliquée avec une épaisseur du film à sec d'au moins 1,5 g/m², mais de préférence avec une épaisseur du film à sec qui n'est pas supérieure à 50 g/m² sur la surface interne d'une boîte en aluminium.

14. Utilisation selon l'une quelconque des revendications 12 et 13 ou selon les deux, **caractérisée en ce que** la laque pour des surfaces internes de boîtes est appliquée via un procédé par pulvérisation.
